# EUROPÄISCHE PATENTSCHRIFT

(11) **EP 2 182 265 B1**
(45) Veröffentlichungstag und Bekanntmachung des Hinweises auf die Patenterteilung: **21.03.2012**
(21) Anmeldenummer: 09173621.5
(22) Anmeldetag: 21.10.2009
(51) Int. Cl.: F16L 37/092, F16L 19/065, F16L 37/091

(54) **Steckverbinder**
Plug-in connector
Connecteur à fiches

(30) Priorität: 31.10.2008 DE 202008014483 U
(43) Veröffentlichungstag der Anmeldung: 05.05.2010
(73) Patentinhaber: Beulco GmbH & Co. KG, 57439 Attendorn (DE)
(72) Erfinder: Pülmanns, Gerhard, 47918 Tönisvorst (DE); Schröder, Klaus, 57439 Attendorn (DE)
(74) Vertreter: Haverkamp, Jens

(56) Entgegenhaltungen:
- DE-U1-202005 019 849
- US-A1- 2003 197 380

## Beschreibung

Die Erfindung betrifft einen Steckverbinder zum Anschluss eines Rohrendes, umfassend ein erstes Verbinderteil mit einer Aufnahme zur Aufnahme des Rohrendes, ein zweites, an das erste Verbinderteil angeschlossenes Verbinderteil mit einer Durchgangsöffnung zum Einführen des Rohrendes in die Aufnahme des ersten Verbinderteils, eine gegen die äußere Mantelfläche eines in die Aufnahme eingesetzten Rohres wirkende Dichtung und einen ein in die Aufnahme eingesetztes Rohrende zum Verhindern eines Auszuges verklammernden Klemmkörper. Ferner betrifft die Erfindung ein Verfahrung zum Herstellen eines solchen Klemmringes.

Steckverbinder, die einen Anschluss eines Rohrendes ohne Werkzeug, d.h. im Wesentlichen lediglich durch ein Einstecken oder ein Aufschrauben von Komponenten ermöglichen, sind in einer Vielzahl von Ausgestaltungen bekannt. Beispielhaft wird auf US 2003/0197380 A verwiesen. Der durch diese Druckschrift offenbarte Steckverbinder umfasst einen Grundkörper mit einer darin in einer Aufnahme zur Aufnahme eines Rohrendes eingelegten Dichtung in Form eines O-Rings. Zusätzlich ist ein Klemmring vorgesehen, der im montierten Zustand eine radial nach innen gerichtete Anpresskraft auf das Rohrende ausübt. Der Klemmring verhindert im Zusammenspiel mit den übrigen Komponenten des Steckverbinders ein Herausziehen des Rohrendes aus dem Dichtelement im Grundkörper. Hierzu wird eine Überwurfmutter verwendet, wobei bei der Montage ein Rohrende durch eine zentrale Durchgangsöffnung geführt wird. In einem nächsten Montageschritt wird die Überwurfmutter mit dem Grundkörper verschraubt. Dabei liegt an einer radialen Innenwandung der Überwurfmutter eine konische Stellfläche vor, die komplementär zu einer hierzu in Wirkverbindung tretenden konischen Stellfläche am Klemmring ausgebildet ist. Aufgrund der konischen Ablaufflächen führt das Aufschrauben der Überwurfmutter am Grundkörper zu einer gleichzeitigen axialen und radialen Kraftbeaufschlagung des Klemmrings, der dadurch gegen das Dichtelement und gegen die Außenwandung des eingeführten Rohrendes gedrückt wird. Nachteilig an einer solchen Anordnung ist, dass die Sicherung des Rohrendes von einer hinreichend angezogenen Verschraubung zwischen der Überwurfmutter und dem Grundkörper abhängt. Dieses stellt eine potenzielle Fehlerquelle beim Anschließen dar.

Zum Herstellen eines Klemmringes gemäß US 2003/0197380 A aus Messing oder einer Messinglegierung wird ein Rohrstück als Rohling verwendet. Dieser wird außen- und innenseitig spanend bearbeitet. An den Schritt der spanenden Bearbeitung schließt ein Schritt des Einbringens der die Klemmsegmente trennenden Schlitze durch Stanzen, Sägen oder Fräsen.

Bevorzugt werden Ausgestaltungen von Steckverbindern, bei der die Grundfunktionen Dichtung und Absicherung gegen ein Freikommen des Rohrendes bereits durch den Arbeitsgang des Einsteckens des Rohrendes in den Steckverbinder bewirkt werden. Hierzu wird auf WO 02/070940 A1 verwiesen. Offenbart ist in diesem Dokument ein Steckverbinder, der in seinem Inneren zusätzlich zum Dichtelement und zum Klemmring einen Stellkörper aufweist, der als elastisch aufweitbares Element mit einer gegenüber dem Außendurchmesser des Rohrendes mit Mindermaß versehenen Durchgangsöffnung ausgestaltet ist. Beim Einstecken des Rohrendes in den Steckverbinder weitet sich der Stellkörper auf. Dabei wird die resultierende, radial nach außen gerichtete Bewegung durch eine konische Abstützung des Stellkörpers wenigstens zum Teil in eine Axialbewegung umgelenkt, die dazu dient, den Klemmring entgegen der Einschubrichtung des Rohrendes zu bewegen. Durch diese Bewegung kommt der Klemmring in Kontakt zu einer ihm zugeordneten konischen Stellschräge und wird infolge klemmend gegen die Außenwandung des Rohrendes geführt. Eine solche Ausgestaltung ist konstruktiv aufwendig, darüber hinaus ist die auf den Klemmring aufbringbare Stellkraft begrenzt. Auch besteht die Gefahr, dass, wenn die von dem Klemmring auf das in den Steckverbinder eingesetzte Rohrende wirkende Klemmkraft nicht hinreichend ist, das Rohr aus dem Steckverbinder herausgezogen bzw. beim Abdrücken der Installation herausgedrückt werden kann.

Des Weiteren wurde durch DE 195 03 301 C1 vorgeschlagen, einen separat zu einem Dichtelement ausgebildeten Klemmring, dem gehäuseseitig eine Stellschräge zugeordnet ist, radial innen mit einer Widerhakenanordnung zu versehen. Durch die Widerhaken wird der Klemmring bei einer Abzugbewegung des Rohrendes mitgenommen und mit der Stellschräge am Gehäuse in Kontakt gebracht. Im Verlauf der Abzugsbewegung wird der Klemmring in zunehmendem Maße gegen die Wandung des Rohrendes gedrückt, bis eine endgültige Verklemmung erreicht ist. Nachteilig an einer solchen Anordnung ist, dass die zur Wandung des Rohrendes hinweisende Anlagefläche des Klemmrings zwei Aufgaben erfüllen muss. Dieses ist zum einen das Sicherstellen der Mitnahme des Klemmelements bei einer Abzugsbewegung des Rohrendes und zum anderen die radial nach innen gerichtete Kraftbeaufschlagung. Hieraus kann insbesondere für Steckverbinder, die Vibrationen oder Stößen ausgesetzt sind, eine Lockerung der Verklemmung des Rohrendes im Steckverbinder nicht sicher ausgeschlossen werden.

Weitere Ausgestaltungen von Rohrverbindern sehen zusätzlich zu einem Dichtelement zwei getrennte Komponenten vor, die im Zusammenspiel der Auszugssicherung dienen. Eine erste Komponente ist eine Mitnehmerscheibe, die einer Einsteckbewegung des Rohrendes einen geringen Widerstand und einer Abzugsbewegung einen hohen Widerstand entgegensetzt. Eine zweite Komponente ist der eigentliche Klemmring, der zur Sicherung des Rohrendes nach radial innen bewegt wird. Die aus US 4,712,813 B und EP 1 319 881 B1 bekannten Ausgestaltungen sehen in Einschubrichtung die Anordnung eines Klemmrings gefolgt von einem Dichtelement und einer nachfolgenden Mitnehmerscheibe vor. Zur Montage wird zunächst das Rohrende vollständig durch die genannten drei Komponenten geschoben und in einem weiteren Montageschritt wird ein Zug entgegen der ursprünglichen Einschubrichtung auf das Rohrende ausgeübt. Hierdurch wird der Klemmring gegen das Dichtelement geführt, das wiederum den Klemmring so mit einer Axialkraft beaufschlagt, dass dieser seine Klemmfunktion erfüllt. Letzteres kann durch komplementär und konisch zueinander ausgebildete Ablaufflächen am Klemmring bewirkt werden. Nachteilig an einer solchen Ausgestaltung ist jedoch, dass zur ordnungsgemäßen Funktion des Klemmrings der Dichtring um eine hinreichende Strecke in axialer Richtung zu bewegen ist. Aufgrund der Reibung eines anliegenden Dichtrings an der Gehäuseinnenwandung kann ein Monteur unter Umständen die für eine vollständige Rückbewegung notwendige Kraft falsch einschätzen, wodurch die Klemmwirkung nur unvollständig eintritt.

Der Erfindung liegt ausgehend von dem diskutierten Stand der Technik die Aufgabe zugrunde, einen Steckverbinder vorzuschlagen, der die Nachteile bekannter Steckverbinder überwindet. Dabei soll sich der Steckverbinder insbesondere durch eine einfache Handhabung auszeichnen. Darüber hinaus soll der Steckverbinder konstruktiv und fertigungstechnisch einfach ausgebildet sein. Letzteres umfasst auch die Aufgabe, dass Herstellungsverfahren für den bei dem Steckverbinder benötigten Klemmring zu vereinfachen.

Gelöst wird diese Aufgabe erfindungsgemäß durch einen eingangs genannten, gattungsgemäßen Steckverbinder, bei dem der Steckverbinder eine funktionale Trennung zwischen seinen für die Abdichtung eingesetzten Elementen und denjenigen für die Rohrverriegelungsfunktion aufweist, indem der Klemmkörper in Einsteckrichtung des Rohrendes in den Steckverbinder hinter der Dichtung angeordnet ist und der Klemmkörper als ein eingesetztes Rohrende einfassender Klemmring mit mehreren in axialer Richtung vom einem Tragring abragenden, jeweils durch einen Schlitz getrennten, Verklammerungsmittel tragenden und in radialer Richtung elastisch reagierenden Klemmsegmenten ausgeführt ist, wobei der Durchmesser des Klemmringes im Bereich der Verklammerungsmittel ohne angeschlossenes Rohr kleiner als der Außendurchmesser eines an den Steckverbinder anzuschließenden Rohres ist.

Bei diesem Steckverbinder sind die Funktionen "Abdichtung des eingesetzten Rohrendes" und "Verklemmen des eingesetzten Rohrendes" voneinander getrennt. Dies hat zum Vorteil, dass eine Abdichtung unabhängig davon gegeben ist, ob das Rohr bestimmungsgemäß in dem Steckverbinder verklammert gehalten ist oder nicht. Dieses erhöht die Dichtsicherheit des Steckverbinders. Ausgeführt ist dieses bei diesem Steckverbinder dadurch, dass der Klemmkörper des Steckverbinders in Einsteckrichtung eines Rohrendes hinter der Dichtung angeordnet ist. Damit ist eine Abdichtungsfunktion der Dichtung, die typischerweise als Dichtring realisiert sein dürfte, an der äußeren Mantelfläche eines Rohrendes gewährleistet, auch wenn durch den Klemmring bzw. seine Verklammerungselemente die äußere Mantelfläche des Rohres beschädigt wird, etwa dadurch, dass die Verklammerungselemente beim Einstecken des Rohres Riefen in die äußere Mantelfläche des Rohres einbringen. Der Klemmring trägt mehrere in axialer Richtung von einem Tragring abragende Klemmsegmente mit Verklammerungsmitteln, die typischerweise als sägezahnartige Rippen ausgeführt sind. Die Klemmsegmente sind in radialer Richtung bezogen auf die Längsachse des Klemmringes elastisch reagierend. Der Durchmesser des Klemmringes im Bereich seiner Verklammerungselemente ist geringfügig kleiner als der Nenndurchmesser eines an den Steckverbinder anzuschließenden Rohres. Dieses hat zur Folge, dass durch den Vorgang des Einsteckens des Rohres in die Aufnahme des Steckverbinders und das dadurch bedingte Hindurchführen des Rohrendes durch den Klemmring die Klemmsegmente in radialer Richtung nach außen verstellt und damit unter Vorspannung gestellt werden. Die Verklammerungsmittel wirken sodann unter Vorspannung stehend gegen die äußere Mantelfläche eines in die Aufnahme des Steckverbinders eingesetzten Rohrendes. Um ein Durchschieben des Rohrendes durch den Klemmring zu erreichen, ist der Klemmring innerhalb der Aufnahme des einen Verbinderteils anschlagbegrenzt gehalten. Durch diese Maßnahme ist der Klemmring nach Einstecken des Rohrendes in längsaxialer Richtung reib- und/oder, wenn sich die Verklammerungsmittel in die äußere Mantelfläche des Rohres etwas eingedrückt haben, formschlüssig angeschlossen. Wird das Rohr entgegen seiner Einsteckrichtung in den Steckverbinder bewegt, werden die Klemmsegmente mit ihren Außenseiten gegen eine Stellschräge eines der beiden Verbinderteile geführt, sodass bei weiterer Bewegung die Verklammerungsmittel der Klemmsegmente in die äußere Mantelfläche des Rohres eingedrückt werden. Diese Rohrbewegung gegenüber dem Steckverbinder stellt sich automatisch bei einem sogenannten Abdrücken der fertigen Installation ein. Aufgrund des axialen Abstandes der Rohraußenwanddichtung von dem Klemmring in axialer Richtung beeinflusst eine solche Rohrbewegung die Dichtung nicht.

Die in axialer Richtung bezogen auf die Längsachse des Klemmringes elastisch reagierenden Eigenschaften der Klemmsegmente können auf unterschiedliche Weise bereitgestellt werden. Bevorzugt ist eine Ausgestaltung, bei der die auf die Klemmsegmente wirkende Rückstellkraft die Folge einer Torsion des Trageringes ist. Bei einer solchen Ausgestaltung brauchen die Klemmsegmente als solche keine elastischen Knick- oder Biegestellen aufweisen. Vielmehr resultiert die Rückstellkraft aus dem Fuß- und Übergangsbereich der Klemmsegmente und/oder dem sich zwischen den Klemmsegmenten ersteckenden Tragringabschnitten. Die Rückstellkräfte und damit die Verklammerungskräfte der Verklammerungsmittel an der Außenwand eines Rohres nach Einstecken desselben in die Aufnahme des Steckverbinders sind bei einer solchen Ausgestaltung im Allgemeinen größer als bei einer Ausgestaltung, bei der in den einzelnen Klemmsegmenten Schwächezonen zum Ausbilden von Torsions- und/oder Biegenuten eingebracht sind. Ein solcher Klemmring ist vorzugsweise aus Metall gefertigt, wobei insbesondere eine Ausgestaltung bevorzugt wird, bei der dieser aus einer typischerweise für derartige Armaturen eingesetzten Messinglegierung gefertigt ist. Damit kann der Klemmring aus demselben Material bestehen wie die beiden Verbinderteile.

Dieser Steckverbinder verfügt nur über eine geringe Anzahl an Bauteilen und kann sehr kompakt realisiert werden. Dieses wirkt sich günstig auf die Minimierung der eingesetzten Materialmenge aus. Auch in seiner Handhabung ist dieser Steckverbinder denkbar einfach. Ein Monteur braucht lediglich das anzuschließende Rohrende in den Steckverbinder ausreichend tief einzustecken, typischerweise bis zu einem Anschlag. Da der Dichtring typischerweise in einer innenseitig umlaufenden Nut unverlierbar in dem zweiten Verbinderteil gehalten ist, während der Klemmring dem ersten Verbinderteil zugeordnet ist, kann bei einer unter Umständen notwendig werdenden Demontage eine Verwechslung der Anordnung dieser Elemente nicht vorkommen.

Die verfahrensbezogene Aufnahme wird erfindungsgemäß dadurch gelöst, dass ausgehend von einem stranggepressten rohförmigen Rohling mit einer innenseitig durch der Längserstreckung des Rohlings folgende Nuten profilierten Mantelfläche, welche Nuten hinsichtlich ihrer Querschnittsfläche der Querschnittsfläche der die Klemmsegmente trennenden Schlitze entsprechen, von der äußeren Mantelfläche des Rohlings in den für die Ausbildung der Klemmsegmente vorgesehenen Abschnitt Material zumindest soweit abgetragen wird, dass der Nutenboden entfernt wird, und der Rohling innenseitig zum Ausbilden von Verklammerungsmitteln bearbeitet wird.

Bei dieser Verfahrensausgestaltung werden die die Klemmsegmente trennenden Schlitze bereits bei dem Vorgang der Rohrherstellung in den Rohling eingebracht, der sodann eine innenprofilierte Mantelfläche aufweist. Im Zuge der ohnehin notwendigen spanenden Bearbeitung der äußeren Mantelfläche des Rohlings wird vor dieser in demjenigen Abschnitt, in dem Klemmsegmente ausgebildet werden sollen, soviel Material abgetragen, bis der Nutenboden abgetragen ist, mithin die Klemmsegmente sodann voneinander durch die Schlitze getrennt sind. Bei diesem Verfahren entfällt der Schritt des Einbringens der Schlitze in den zuvor außen- und innenseitig spanend bearbeiteten Rohling. Bei dem beanspruchten Verfahren können sämtliche materialabtragenden Bearbeitungsschritte an einer Maschine durchgeführt werden. Infolgedessen ist die Herstellung eines solchen Klemmringes vereinfacht.

Nachfolgend ist die Erfindung anhand eines Ausführungsbeispiels unter Bezugnahme auf die beigefügten Figuren beschrieben. Es zeigen:
- **Fig. 1:**: eine zum Teil geschnittene Darstellung eines Steckverbinders nach Art einer Explosionsdarstellung zum Anschluss eines Roh- rendes,
- **Fig. 2:**: den zusammengesetzten Steckverbinder der Figur 1,
- **Fig. 2a:**: eine Teildraufsicht auf den Klemmring des Steckverbinders der Figuren 1 und 2,
- **Fig. 3:**: eine vergrößerte Darstellung des in Figur 2 gezeigten Aus- schnittes mit einem in den Steckverbinder eingesetzten Roh- rende nach einem ersten Montageschritt und
- **Fig. 4:**: die Darstellung der Figur 3 nach bestimmungsgemäßer Verrie- gelung des Rohrendes in dem Steckverbinder.

Ein Steckverbinder 1 zum Anschließen eines Rohres umfasst ein erstes, als Grundkörper dienendes Verbinderteil 2, ein mit dem ersten Verbinderteil 2 verschraubbares zweites Verbinderteil 3 sowie einen Klemmring 4. Dem Steckverbinder 1 zugehörig sind ferner zwei Dichtringe 5, 6, wobei der Dichtring 5 als Profildichtring und der Dichtring 6 als einfacher O-Ring ausgeführt sind. Das erste Verbinderteil 2 trägt an seinem von dem Verbinderteil 3 wegweisenden Ende einen Anschlussstutzen mit einem Außengewinde, mit dem der Steckverbinder 1 an eine Installation angeschlossen werden kann. Das erste Verbinderteil 2 verfügt über eine Aufnahme 7 zur Aufnahme eines Rohrendes. Des Weiteren verfügt das Verbinderteil 2 über eine Klemmringaufnahme 8, die in Einsteckrichtung eines Rohres in den Steckverbinder 1 durch einen radial nach innen vorspringenden Absatz 9 als Anschlag begrenzt ist. Das erste Verbinderteil 2 weist zudem einen in Einsteckrichtung eines Rohrendes konisch verjüngten inneren Ringabschnitt 10 auf, der als Anschlagfläche für die rohrendseitige Fase eines in den Steckverbinder 1 einzusetzenden Rohrendes darstellt.

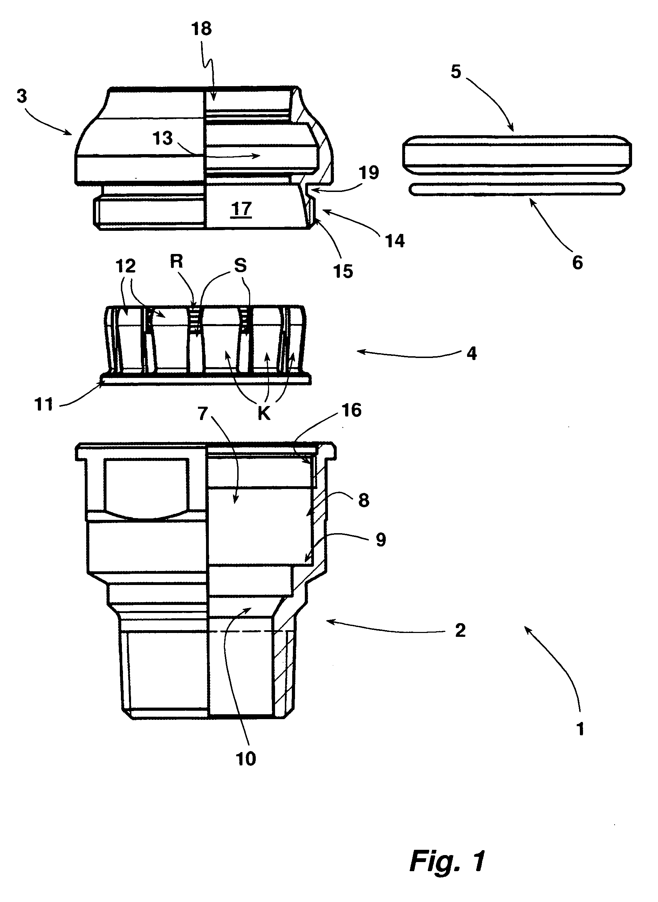

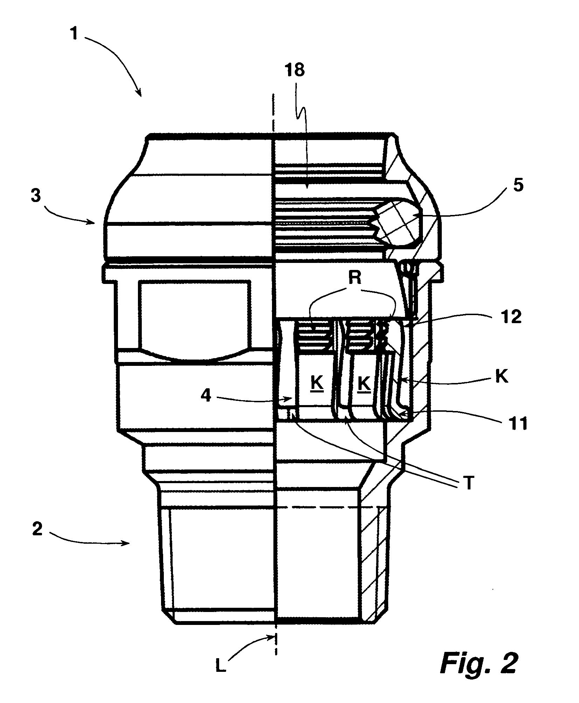

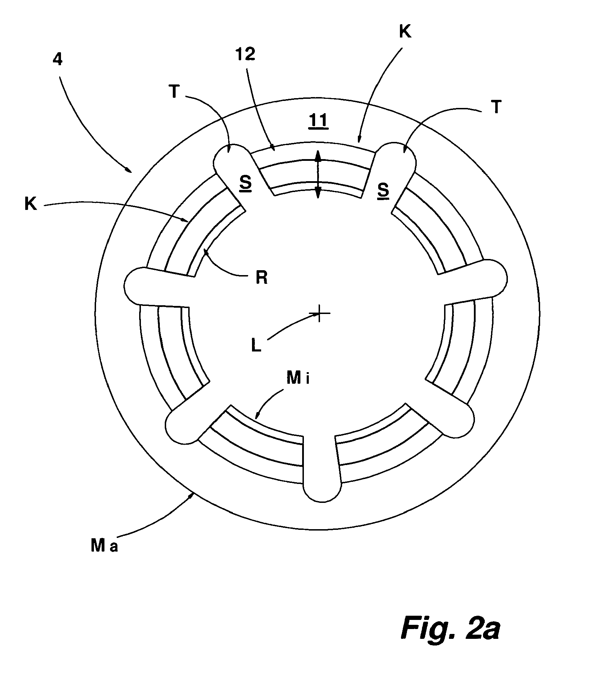

Der Klemmring 4 besteht bei dem dargestellten Ausführungsbeispiel aus einem Tragring 11 mit einer rechteckförmigen Querschnittsfläche. Angeformt an den Tragring 11 sind mehrere, jeweils durch einen Schlitz S voneinander getrennte Klemmsegmente K. Die Klemmsegmente K erstrecken sich ausgehend vom dem Tragring 11 entgegen der Einsteckrichtung eines Rohrendes in den Steckverbinder 1 in axialer Richtung des Steckverbinders 1 und so parallel oder quasi parallel zu der äußeren Mantelfläche eines in den Steckverbinder 1 einzusetzenden Rohrendes. Die Klemmsegmente K verfügen über jeweils einen Klemmkopf, dessen in Figur 1 erkennbare äußere, vordere gekrümmte Außenfläche 12 als Stellfläche dient. In radialer Richtung nach innen von den Klemmköpfen abragend, trägt jeder Klemmkopf als Verklammerungsmittel mehrere sägezahnartig ausgebildete Verklammerungsrippen R. Der die Klemmsegmente K verbindende Tragring 11 weist einen größeren Außendurchmesser auf als eine die in radialer Richtung nach außen weisenden Seiten der Klemmsegmente verbindende Mantelfläche (siehe auch Fig. 2a).

Hergestellt worden ist der Klemmring 4 ausgehend von einem stranggepressten und hinsichtlich seiner inneren Mantelfläche profilierten Rohling. In der Stirnseitenansicht des Klemmringes 4 der Figur 2a ist die Stirnfläche des profilierten Rohlings erkennbar, bevor dieser im Wege einer spanenden Bearbeitung zum Ausbilden der Klemmsegmente K bearbeitet worden ist. Abzüglich eines lediglich geringen Materialabtrages entspricht die äußere Mantelfläche Mₐ der äußeren Mantelfläche des Rohlings und die innere Mantelfläche Mᵢ der inneren Mantelfläche des Rohlings. Die in Figur 2a erkennbare Innenprofilierung des Rohlings entspricht der gewünschten Geometrie der die Klemmsegmente K voneinander trennenden Schlitze S. Im Wege eines spanenden Bearbeitungsschrittes wurde derjenige Abschnitt des Rohlings, den die Klemmsegmente K ausbilden soll, ausgehend von der äußeren Mantelfläche Mₐ des Rohlings bearbeitet, und zwar soweit, dass im Zuge dieser materialabtragenden Bearbeitung der Nutenboden entfernt worden ist. Ist der Nutenboden zwischen den auszubildenden Klemmsegmenten K entfernt, sind diese gegeneinander in radialer Richtung frei beweglich, wie dieses durch den Doppelpfeil anhand eines Klemmsegmentes K kenntlich gemacht ist. Im Zuge dieser materialabtragenden Bearbeitung wird die äußere Kontur der Klemmsegmente K eingestellt. Im Zuge einer spanenden Innenbearbeitung der profilierten Mantelfläche des Rohlings wird die in radialer nach innen weisende Fläche der Klemmsegmente ausgebildet, wozu auch das Ausbilden der Verklammerungsrippen R zählt.

Das zweite Verbinderteil 3 verfügt über eine innere umlaufende Nut 13 zur Aufnahme des in radialer Richtung innenseitig profilierten Dichtringes 5. Die Nut 13 ist asymmetrisch konzipiert mit dem Zweck, dass bei einer Bewegung eines in den Steckverbinder 1 eingesetzten Rohrendes entgegen seiner Einsteckrichtung der Dichtring 5 nicht rollt und dadurch die an der Außenwand des Rohres anliegenden Dichtlippen des Dichtringes 5 in ihrer bestimmungsgemäßen Anlageanordnung an der äußeren Mantelfläche desselben anliegen.

Teil des zweiten Verbinderteils 3 ist ein Anschlussring 14. Die Außenseite des Anschlussrings 14 trägt ein Außengewinde 15. Mit diesem kann das zweite Verbinderteil 3 mit dem ersten Verbinderteil 2 verschraubt werden, welches zu diesem Zweck im Bereich des ersten mündungsnahen Abschnittes der Klemmringaufnahme 8 ein komplementäres Innengewinde 16 trägt. Die Innenseite des Anschlussringes 14 ist als Stellschräge 17 für die vorderen Außenseiten 12 der Klemmsegmente K konzipiert, und zwar dergestalt, dass diese von dem zu dem Verbinderteil 2 weisende Mündung wegweisend gekrümmt verjüngt ist. Das zweite Verbinderteil 3 verfügt zudem über eine zentrale Durchgangsöffnung 18.

Der Dichtring 6 dient zum Abdichten der Schraubverbindung zwischen den beiden Verbinderteilen 2, 3 und sitzt in einer in radialer Richtung nach außen hin offenen umlaufenden Nut 19 des zweiten Verbinderteils 3.

Der funktionsfertig zusammengebaute Steckverbinder 1 ist in Figur 2 gezeigt. Aus dieser Darstellung sind die Profilierung des Dichtringes 5 und die Ausbildung der Klemmköpfe der Klemmsegmente K erkennbar. Die Schlitze S zwischen den Klemmsegmenten K setzen sich in dem Tragring 11 in jeweils einer in den Tragring 11 eingebrachte Torsionsnut T fort. Figur 2a zeigt in einem Ausschnitt einer Draufsicht auf den Klemmring 4 die beschriebene Anordnung von Tragring 11, Klemmsegmenten K, Schlitzen S und Torsionsnuten T zueinander. Die Darstellung der Figur 2 macht deutlich, dass der Innendurchmesser des Klemmringes 4 im Bereich der Verklammerungsrippen R der Klemmsegmente K kleiner ist als der Innendurchmesser des Trageringes 11. Der lichte Innendurchmesser des Klemmringes 4 im Bereich der Verklammerungsrippen R ist kleiner als der Nenndurchmesser eines an den Steckverbinder 1 anzuschließenden Rohres, und zwar in einem solchen Maße, dass infolge einer radialen Verstellbewegung der Klemmköpfe der Klemmsegmente K, wie durch die Doppelpfeile kenntlich gemacht, beim Durchstecken eines Rohrendes durch den Klemmring 4 die Verklammerungsrippen R mit einer hinreichenden Vorspannung an der äußeren Mantelfläche des Rohrendes anliegen, damit der Klemmring an eine Auszugsbewegung des Rohrendes aus dem Steckverbinder 1 angeschlossen ist. Zur Orientierung ist die Längsachse des Klemmringes 4 und diejenige des Steckverbinders 1 in Figuren 2, 2a mit dem Bezugszeichen L markiert.

Die beiden Verbinderteile 2, 3 und der Klemmring 4 sind aus ein und demselben Messingwerkstoff hergestellt. Grundsätzlich ist es ebenfalls möglich, den Klemmring aus Kunststoff zu fertigen, solange sichergestellt ist, dass über die Verklammerungsrippen ein hinreichender Anschluss des Klemmringes an ein eingesetztes Rohrende gewährleistet ist. Bei Vorsehen eines grundsätzlichen aus Kunststoff hergestellten Klemmrings können die Verklammerungsrippen beispielsweise aus Metall bestehen oder metallverstärkt sein.

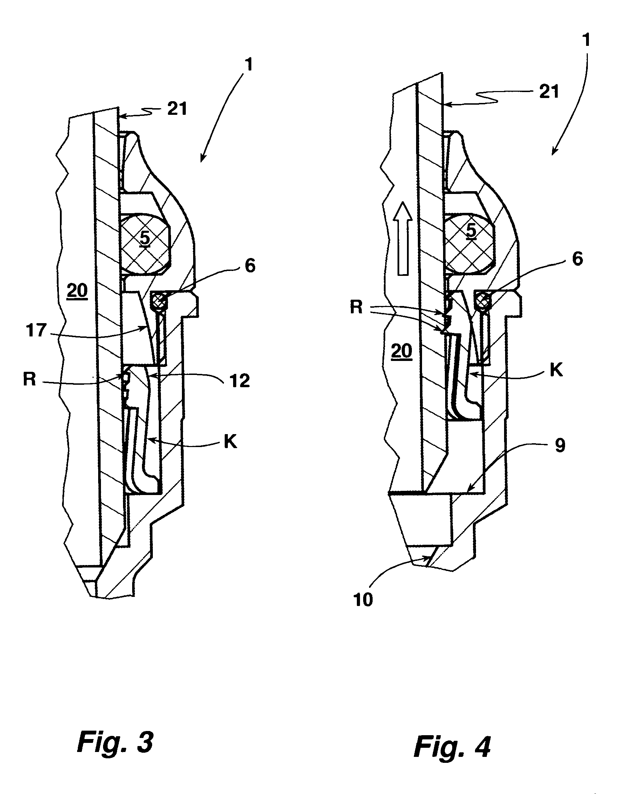

Angeschlossen werden an den Steckverbinder 1 vorzugsweise Kunststoffrohre oder Rohre mit einem äußeren Kunststoffmantel. Ein in den Steckverbinder 1 eingestecktes Kunststoffrohr ist in Figur 3 in einer Ausschnittsvergrößerung der Darstellung des Steckverbinders 1 der Figur 2 gezeigt. Das in den Steckverbinder 1 eingesetzte Rohrende ist mit dem Bezugszeichen 20 kenntlich gemacht. Figur 3 macht deutlich, dass der Einsteckbetrag des Rohrendes 20 durch den Ringabschnitt 10 begrenzt ist, an dem die einsteckseitige äußere Fase des Rohrendes 20 anliegt. Damit dient der Ringabschnitt 10 als Anschlag und signalisiert einem Monteur das Erreichen der Einsteckendposition des Rohrendes. Im Zuge des Einsteckvorganges ist das Rohrende 20 zunächst durch den Dichtring 5 hindurch und im Zuge des weiteren Einsteckvorganges durch den Klemmring 4 hindurchgeschoben worden. Beide Elemente - Dichtring 5 und Klemmring 4 bzw. die Klemmsegmente K - haben sich im Zuge dieses Durchschiebens aufgeweitet und liegen unter Vorspannung stehend an der äußeren Mantelfläche 21 des Rohres 20 an. Die Klemmsegmente K des Klemmringes 4 sind durch Einschieben des Rohres 20 mit ihren Klemmköpfen in radialer Richtung nach außen verstellt worden, und zwar gegen die torsionsbedingte Rückstellkraft des Tragringes 11. Die Verklammerungsrippen R werden somit unter der Torsionsrückstellkraft des Tragringes 11 gegen die Mantelfläche 21 des Rohres 20 gepresst und drücken sich in diese geringfügig ein. Aufweiten konnten sich die Klemmkörper K gegenüber dem Tragring 11, da letzterer an dem Absatz 9 anliegt. Ausgenutzt werden die material- und geometriebedingten Eigenschaften des Klemmringes 4 bzw. seiner Einzelkomponenten zum Bereitstellen der elastischen Eigenschaften. Figur 3 macht des Weiteren deutlich, dass im Zuge des Durchschiebens des Rohrendes 20 durch den Klemmring 4 in die Mantelfläche 21 eingebrachte Riefen keinerlei Auswirkungen auf eine Beeinträchtigung der durch den Dichtring 5 bereitgestellten Dichtfunktion haben.

Eine den späteren Benutzungsanforderungen genügende Verklammerung zwischen dem Steckverbinder 1 und dem darin eingesetzten Rohrende 20 wird herbeigeführt, wenn das Rohrende 20 entgegen seiner Einsteckbewegung aus der Aufnahme 7 herausbewegt wird. Infolge der Verklammerung der Verklammerungsrippen R an bzw. in der Mantelfläche 21 des Rohrendes 20 wird bei dieser Bewegung der Klemmring 4 mitbewegt und damit die als Gleitflächen dienenden Außenflächen 12 in Kontakt mit der Stellschräge 17 des zweiten Verbinders 3 gebracht. In Folge der Krümmung der Stellschräge 17 hat eine solche Rohr- und Klemmringbewegung zur Folge, dass die Verklammerungsrippen R, wie in Figur 4 gezeigt, tiefer in die äußere Mantelfläche 21 des Rohrendes 20 eingedrückt werden. Eine solche Rohrbewegung kann individuell unmittelbar nach dem Einsetzen eines Rohres in die Aufnahme eines Steckverbinders erfolgen. Typischerweise wird die vorbeschriebene Verklammerung jedoch im Zuge des sogenannten Abdrückens der mit dem Steckverbinder 1 und dem Rohrende 20 erstellten Installation herbeigeführt. Bei einem solchen Abdrücken wird die Installation unter Druck gesetzt.

In Figur 4 ist der Bewegungsbetrag, mit dem das Rohrende 20 beim Abdrücken der Installation aus der Aufnahme 7 herausbewegt worden ist, erkennbar.

Die Erfindung ist vorstehend anhand eines Ausführungsbeispieles beschrieben worden. Für einen Fachmann ergeben sich, ohne den Umfang der Ansprüche zu verlassen, zahlreiche weitere Ausgestaltungen, die Erfindung verwirklichen zu können, ohne dass diese an dieser Stelle näher beschrieben werden müssten.

### Bezugszeichenliste

- 1: Steckverbinder
- 2: erstes Verbinderteil
- 3: zweites Verbinderteil
- 4: Klemmring
- 5: Dichtring
- 6: Dichtring
- 7: Aufnahme
- 8: Klemmringaufnahme
- 9: Absatz
- 10: Ringabschnitt
- 11: Tragring
- 12: Außenfläche
- 13: Nut
- 14: Anschlussring
- 15: Außengewinde
- 16: Innengewinde
- 17: Stellschräge
- 18: Durchgangsöffnung
- 19: Nut
- 20: Rohr
- 21: Mantelfläche

- K: Klemmsegment
- L: Längsachse
- Mₐ: äußere Mantelfläche
- Mᵢ: innere Mantelfläche
- R: Verklammerungsrippe
- S: Schlitz
- T: Torsionsnut

## Patentansprüche

1. Steckverbinder zum Anschluss eines Rohrendes, umfassend ein erstes Verbinderteil (2) mit einer Aufnahme (7) zur Aufnahme des Rohrendes (20), ein zweites, an das erste Verbinderteil (2) angeschlossenes Verbinderteil (3) mit einer Durchgangsöffnung (18) zum Einführen des Rohrendes (20) in die Aufnahme (7) des ersten Verbinderteils (2), eine gegen die äußere Mantelfläche (21) eines in die Aufnahme (7) eingesetzten Rohres (20) wirkende Dichtung (5) und einen ein in die Aufnahme (7) eingesetztes Rohrende (20) zum Verhindern eines Auszuges verklammernden Klemmkörper (4), **dadurch gekennzeichnet, dass** der Steckverbinder (1) eine funktionale Trennung zwischen seinen für die Abdichtung eingesetzten Elementen und denjenigen für die Rohrverriegelungsfunktion aufweist, indem der Klemmkörper (4) in Einsteckrichtung des Rohrendes (20) in den Steckverbinder (1) hinter der Dichtung (5) angeordnet ist und der Klemmkörper als ein eingesetztes Rohrende (20) einfassender Klemmring (4) mit mehreren in axialer Richtung vom einem Tragring (11) abragenden, jeweils durch einen Schlitz (S) getrennten, Verklammerungsmittel (R) tragenden und in radialer Richtung elastisch reagierenden Klemmsegmenten (K) ausgeführt ist, wobei der Durchmesser des Klemmringes (4) im Bereich der Verklammerungsmittel (R) ohne angeschlossenes Rohr kleiner als der Außendurchmesser eines an den Steckverbinder (1) anzuschließenden Rohres (20) ist.

2. Steckverbinder nach Anspruch 1, **dadurch gekennzeichnet, dass** die rohrseitige Dichtung als Dichtring (5) ausgeführt ist, der in einer umlaufenden Nutaufnahme (13) des zweiten Verbinderteils (3) gehalten ist.

3. Steckverbinder nach Anspruch 1 oder 2, **dadurch gekennzeichnet, dass** der Klemmring (4) mit seinem Tragring (11) in einer Klemmkörperaufnahme (8) mit einem in Einsteckrichtung des Rohrendes (20) wirkenden Anschlag (9) des ersten Verbinderteils (2) in längsaxialer Richtung verstellbar angeordnet ist.

4. Steckverbinder nach einem der Ansprüche 1 bis 3, **dadurch gekennzeichnet, dass** sich die elastisch reagierenden Eigenschaften der Klemmsegmente (K) des Klemmringes (4) in radialer Richtung als Folge einer Torsionsbeanspruchung des Tragringes (11) einstellen.

5. Steckverbinder nach Anspruch 4, **dadurch gekennzeichnet, dass** der Tragring (11) einen größeren Außendurchmesser aufweist als eine die in radialer Richtung nach außen weisenden Seiten der Klemmsegmente (K) verbindenden Mantelfläche.

6. Steckverbinder nach Anspruch 4 oder 5, **dadurch gekennzeichnet, dass** der Tragring (11) im Bereich der jeweils zwei Klemmsegmente (K) trennenden Schlitze (S) eine in seine Innenseite eingebrachte Torsionsnut (T) aufweist.

7. Steckverbinder nach einem der Ansprüche 1 bis 6, **dadurch gekennzeichnet, dass** das zweite Verbinderteil (3) über eine in die Aufnahme (7) des ersten Verbinderteils (2) ragende Stellschräge (17) als Widerlager für die Klemmsegmente (K) verfügt.

8. Steckverbinder nach Anspruch 7, **dadurch gekennzeichnet, dass** die Stellschräge (17) entgegen der Einsteckrichtung eines Rohrendes (20) in den Steckverbinder (1) konisch verjüngt ausgebildet ist.

9. Steckverbinder nach Anspruch 7 oder 8, **dadurch gekennzeichnet, dass** die Stellschräge (17) die innere Mantelfläche eines in die Aufnahme (7) des ersten Verbinderteils (2) ragenden Verbindungsrings (14) mit einem Außengewinde (15) zum Verschrauben des zweiten Verbinderteils (3) mit dem ersten Verbinderteil (2) ist.

10. Steckverbinder nach Anspruch 9, **dadurch gekennzeichnet, dass** der Verschraubung ein Dichtring (6) zugeordnet ist.

11. Steckverbinder nach einem der Ansprüche 1 bis 10, **dadurch gekennzeichnet, dass** der Klemmring (4) ein Metallteil, insbesondere hergestellt aus einer Messinglegierung, ist.

12. Verfahren zum Herstellen eines Klemmringes (4) für einen Steckverbinder nach einem der Ansprüche nach 1 bis 11, welcher Klemmring (4) einen Tragring (11) aufweist, dessen Außendurchmesser größer ist als eine die in radialer Richtung nach außen weisenden Seiten der Klemmsegmente (K) verbindenden Mantelfläche, **dadurch gekennzeichnet, dass** ausgehend von einem stranggepressten rohförmigen Rohling mit einer innenseitig durch der Längserstreckung des Rohlings folgende Nuten profilierten Mantelfläche, welche Nuten hinsichtlich ihrer Querschnittsfläche der Querschnittsfläche der die Klemmsegmente (K) trennenden Schlitze (S) entsprechen, von der äußeren Mantelfläche (Mₐ) des Rohlings in den für die Ausbildung der Klemmsegmente (K) vorgesehenen Abschnitt Material zumindest soweit abgetragen wird, dass der Nutenboden entfernt wird, und der Rohling innenseitig zum Ausbilden von Verklammerungsmitteln (R) bearbeitet wird.

## Claims

1. Plug-in connector for connecting a tube end, comprising a first connector part (2) with a receiver (7) for receiving the tube end (20), a second connector part (3) attached to the first connector part (2) with a through-passage (18) for inserting the tube end (20) into the receiver (7) of the first connector part (2), a seal (5) acting against the outer surface area (21) of a tube (20) inserted into the receiver (7) and a clamping body (4) clamping a tube end (20) inserted into the receiver (7) in order to prevent a pull-out, **characterised in that** the plug-in connector (1) has a functional separation between its elements inserted for sealing and those for the tube locking function by arranging the clamping body (4) in the insertion direction of the tube end (20) in the plug-in connector (1) behind the seal (5) and designing the clamping body as a clamping ring (4) surrounding an inserted tube end (20) with several clamping segments (K) protruding in the axial direction from a carrier ring (11), each separated by a slot (S), carrying clamping means (R) and elastically reacting in the radial direction, wherein the diameter of the clamping ring (4) in the area of the (plurality of) clamping means (R) without connected tube is smaller than the outer diameter of a tube (20) to be connected to the plug-in connector (1).

2. Plug-in connector according to claim 1, **characterised in that** the tube-side seal is designed as a sealing ring (5) held in an all-round grooved holder (13) of the second connector part (3).

3. Plug-in connector according to claim 1 or 2, **characterised in that** the clamping ring (4) with its carrier ring (11) is adjustably arranged, in the longitudinally axial direction, in a clamping body receiver (8) with a stop (9) of the first connector part (2) acting in the insertion direction of the tube end (20).

4. Plug-in connector according to one of the claims 1 to 3, **characterised in that** the elastically reacting properties of the clamping segments (K) of the clamping ring (4) occur in the radial direction as a consequence of a torsional stress upon the carrier ring (11).

5. Plug-in connector according to claim 4, **characterised in that** the carrier ring (11) has a greater outer diameter than a surface area connecting the sides of the clamping segments (K) pointing outwards in the radial direction.

6. Plug-in connector according to claim 4 or 5, **characterised in that** the carrier ring (11) has, in the area of the slots (S) each separating two clamping segments (K), a torsional groove (T) introduced into its inside.

7. Plug-in connector according to any one of the claims 1 to 6, **characterised in that** the second connector part (3) has an adjusting chamfer (17), which protrudes into the receiver (7) of the first connector part (2), as an abutment for the clamping segments (K).

8. Plug-in connector according to claim 7, **characterised in that** the adjusting chamfer (17) is tapered conically contrary to the insertion direction of a tube end (20) in the plug-in connector (1).

9. Plug-in connector according to claim 7 or 8, **characterised in that** the adjusting chamfer (17) is the inner surface area of a connection ring (14), that protrudes into the receiver (7) of the first connector part (2), with an outer thread (15) for screwing together the second connector part (3) with the first connector part (2).

10. Plug-in connector according to claim 9, **characterised in that** a sealing ring (6) is allocated to the screw connection.

11. Plug-in connector according to any one of the claims 1 to 10, **characterised in that** the clamping ring (4) is a metal part, especially one made of a brass alloy.

12. Method for producing a clamping ring (4) for a plug-in connector according to one of the claims 1 to 11, said clamping ring (4) having a carrier ring (11) whose outer diameter is greater than a surface area connecting the sides of the clamping segments (K) pointing outwards in the radial direction, **characterised in that**, based on an extruded tubular blank with a surface area profiled on the inside by grooves that follow the longitudinal expansion of the blank, said grooves corresponding, in respect of their cross-sectional area, the cross-sectional area of the slots (S) separating the clamping segments (K), material is removed from the outer surface area (Mₐ) of the blank in the region intended for the formation of the clamping segments (K) at least until the bottom of the groove is removed, and the blank is machined inside for the formation of clamping means (R).

## Revendications

1. Connecteur à fiches pour raccorder une extrémité de conduit, comprenant une première pièce de connecteur (2) avec un logement (7) destiné à recevoir l'extrémité de conduit (20), une deuxième pièce de connecteur (3) raccordée à la première pièce de connecteur (2), munie d'une ouverture de passage (18) afin d'introduire l'extrémité de conduit (20) dans le logement (7) de la première pièce de connecteur (2), un joint (5) agissant contre la surface de gaine (21) extérieure d'un conduit (20) engagé dans le logement (7) et un corps de serrage (4) agrippant une extrémité de conduit (20) engagée dans le logement (7) pour éviter le glissement, **caractérisé en ce que** le connecteur à fiches (1) présente une séparation fonctionnelle entre ses éléments utilisés pour assurer le colmatage et ceux pour assurer les fonctions de verrouillage du conduit, du fait que le corps de serrage (4) est disposé, dans le sens d'enfichage de l'extrémité de conduit (20) dans le connecteur à fiches (1), derrière le joint (5) et que le corps de serrage est conformé en tant que bague de serrage (4) enserrant une extrémité de conduit (20) engagée au moyen de plusieurs segments de serrage (K) en saillie dans le sens radial par rapport à une bague porteuse (11), séparés les uns des autres par une fente (S), supportant des moyens de serrage (R) et réagissant de façon élastique dans le sens radial, le diamètre de la bague de serrage (4) étant, dans la zone des moyens de serrage (R), sans conduit raccordé, plus petit que le diamètre extérieur d'un conduit (20) à raccorder au connecteur à fiches (1).

2. Connecteur à fiches selon la revendication 1, **caractérisé en ce que** le joint côté conduit est conformé en bague de garniture (5) qui est maintenue dans un logement à rainure (13) périphérique de la seconde pièce de connecteur (3).

3. Connecteur à fiches selon la revendication 1 ou 2, **caractérisé en ce que** la bague de serrage (4) avec sa bague porteuse (11) est disposée de manière réglable dans le sens axial longitudinal dans un logement de réception de corps de serrage (8) avec une butée (9) agissant dans le sens d'enfichage de l'extrémité de conduit (20) de la première pièce de connecteur (2).

4. Connecteur à fiches selon l'une des revendications 1 à 3, **caractérisé en ce que** les propriétés de réaction élastique des segments de serrage (K) de la bague de serrage (4) s'instaurent dans le sens radial à la suite d'une sollicitation par torsion de la bague porteuse (11).

5. Connecteur à fiches selon la revendication 4, **caractérisé en ce que** la bague porteuse (11) présente un diamètre extérieur plus grand qu'une surface de gaine reliant les faces orientées dans le sens radial vers l'extérieur des segments de serrage (K).

6. Connecteur à fiches selon la revendication 4 ou 5, **caractérisé en ce que** la bague porteuse (11) présente au niveau des fentes (S) séparant respectivement deux segments de serrage (K) une rainure de torsion (T) aménagée dans sa face intérieure.

7. Connecteur à fiches selon l'une des revendications 1 à 6, **caractérisé en ce que** la seconde pièce de connecteur (3) dispose en guise de contre-butée pour les segments de serrage (K) un biseau de réglage (17) en saillie dans le logement (7) de la première pièce de connecteur (2).

8. Connecteur à fiches selon la revendication 7, **caractérisé en ce que** le biseau de réglage (17) est conformé en se rétrécissant de façon conique dans le sens contraire à l'enfichage de l'extrémité de conduit (20) dans le connecteur à fiches (1).

9. Connecteur à fiches selon la revendication 7 ou 8 **caractérisé en ce que** le biseau de réglage (17) est la surface de gaine intérieure d'une bague d'assemblage (14) s'engageant dans le logement (7) de la première pièce de connecteur (2), muni d'un filetage extérieur (15) destiné à solidariser par vissage la seconde pièce de connecteur (3) avec la première pièce de connecteur (2).

10. Connecteur à fiches selon la revendication 9, **caractérisé en ce qu'**une bague de garniture (6) est associée au vissage.

11. Connecteur à fiches selon l'une des revendications 1 à 10, **caractérisé en ce que** la bague de serrage (4) est une pièce métallique, notamment fabriquée en alliage de laiton.

12. Procédé de fabrication d'une bague de serrage (4) pour un connecteur à fiches selon l'une des revendications 1 à 11, laquelle bague de serrage (4) présente une bague porteuse (11) dont le diamètre extérieur est plus grand qu'une surface de gaine reliant les faces orientées dans le sens radial vers l'extérieur des segments de serrage (K), **caractérisé en ce que**, en partant d'une ébauche de forme tubulaire extrudée comportant une surface de gaine profilée sur la face intérieure par des rainures suivant le long de l'étendue longitudinale de l'ébauche, lesquelles rainures correspondent par leur superficie de section à la superficie de section des fentes (S) séparant les segments de serrage (K), de la matière est retirée de la surface de gaine extérieure (Mₐ) de l'ébauche, dans le tronçon prévu pour réaliser les segments de serrage (K), au moins au point d'enlever le fond à rainures et que l'ébauche est usinée sur la face intérieure afin de former des moyens de serrage (R).
